(19) Europäisches Patentamt
European Patent Office
Office européen des brevets

(11) **EP 1 458 774 B1**

(12) **EUROPÄISCHE PATENTSCHRIFT**

(45) Veröffentlichungstag und Bekanntmachung des Hinweises auf die Patenterteilung:
**28.06.2006 Patentblatt 2006/26**

(21) Anmeldenummer: **02795269.6**

(22) Anmeldetag: **23.12.2002**

(51) Int Cl.:
*C08F 218/08* (2006.01)     *C08F 222/14* (2006.01)
*C09D 131/04* (2006.01)     *A23C 19/16* (2006.01)

(86) Internationale Anmeldenummer:
**PCT/EP2002/014709**

(87) Internationale Veröffentlichungsnummer:
**WO 2003/054041 (03.07.2003 Gazette 2003/27)**

(54) **LEBENSMITTELBESCHICHTUNGSMASSE ENTHALTEND EINE WEICHMACHERFREIE WÄSSRIGE COPOLYMERE POLY(VINYLESTER)-DISPERSION DEREN HERSTELLUNG UND VERWENDUNG**

FOOD COATING SUBSTANCE CONTAINING A SOFTENER-FREE, AQUEOUS COPOLYMER POLY (VINYL ESTER) DISPERSION, PRODUCTION AND USE THEREOF

MASSE DE RECOUVREMENT DE PRODUITS ALIMENTAIRES CONTENANT UNE DISPERSION COPOLYMERE AQUEUSE DE POLY(VINYLESTER) SANS PLASTIFIANTS, PRODUCTION ET UTILISATION DE CETTE MASSE

(84) Benannte Vertragsstaaten:
**AT BE BG CH CY CZ DE DK EE ES FI FR GB GR IE IT LI LU MC NL PT SE SI SK TR**

(30) Priorität: **21.12.2001 DE 10163586**

(43) Veröffentlichungstag der Anmeldung:
**22.09.2004 Patentblatt 2004/39**

(73) Patentinhaber:
• **Celanese Emulsions GmbH**
**61476 Kronberg/Ts. (DE)**
Benannte Vertragsstaaten:
**AT BE BG CH CY CZ DE DK EE ES FI FR GB GR IE IT LU MC NL PT SE SI SK**
• **Clariant GmbH**
**65929 Frankfurt (DE)**
Benannte Vertragsstaaten:
**TR**

(72) Erfinder:
• **JAKOB, Martin**
**65779 Kelkheim (DE)**
• **HARRER, Heinrich**
**60529 Frankfurt am Main (DE)**

(74) Vertreter: **Ackermann, Joachim**
**Postfach 11 13 26**
**60048 Frankfurt am Main (DE)**

(56) Entgegenhaltungen:
**EP-A- 0 167 477          GB-A- 1 044 610**
**US-A- 4 694 056**

## Beschreibung

Die vorliegende Erfindung betrifft verbesserte Kunststoffdispersionen auf Basis von copolymeren Poly(vinylestern) zur Beschichtung von Lebensmitteln, die sich insbesondere als antimikrobiell ausgerüstete Hilfsstoffe für die Käsereifung eignen.

Der Einsatz von Kunststoffdispersionen, insbesondere auf der Basis von homo- oder copolymeren Poly(vinylestern), insbesondere Poly(vinylacetat), zur Beschichtung von Hartkäse ist seit langem bekannt. Durch die Oberflächenbehandlung und dem nachfolgenden Auftrocknen der Dispersion wird ein luftdurchlässiger Wasserdampf-Barrierefilm generiert, der sowohl die Schimmelbildung auf dem Käse, als auch ein zu schnelles Austrocknen der Käselaibe während der Reifung verhindert. Während des Reifeprozesses durchlaufen die Käse eine mehrere Monate dauernde Lagerung in Feuchträumen. Dem unerwünschten Wachstum von Mikroorganismen wird dabei durch eine antimikrobielle Ausrüstung der Dispersionen mit speziellen Bioziden, wie zum Beispiel in EP-A-0 986 965 beschrieben, entgegengewirkt. Meist wird für den Transport zum Endkunden der Käselaib zum Schutz mit Wachsen auf Paraffinbasis beschichtet. Beschichtungen auf Basis von homo- oder copolymeren Poly(vinylestern) müssen daher zusätzlich noch eine hinreichend hohe Adhäsion zu solchen Wachsüberzügen zeigen, die so durch normale mechanische Behandlung nicht ablösbar sein dürfen.

Als Basis für solche Lebensmittelbeschichtungsmassen haben sich neben anderen Systemen Dispersionen auf Basis von homo- oder copolymerem Poly(vinylacetat) seit langem bewährt.

Bereits das Mowilith-Handbuch der Hoechst AG (5. Auflage, 1970, Kap. 6.8, S. 201f.) nennt für dieses Einsatzgebiet die homopolymere Dispersion ® Mowilith D ca. 50 %ig sowie die copolymere Dispersion ® Mowilith DM 2 KL ca. 45 %ig. Bei letzterer handelt es sich gemäß den einschlägigen Produktinformationen um eine weichmacherfreie Dispersion von Copolymeren aus Vinylacetat mit Dibutylmaleinat.

Die DD-A-81 308 beschreibt eine Käseüberzugsmasse auf der Basis von 97 Gew.-% einer Poly(vinylacetat)-Homopolymerdispersion, 2 Gew.-% Sorbinsäure und 1 Gew.-% Ammoniak zur Beschichtung diverser Hartkäsesorten. Auf Grund der zu hohen Sprödigkeit des Films und der vorhandenen Mattigkeit spielen Käsedeckmassen auf der Basis von nicht weichgemachten Poly(vinylestern) allerdings am Markt nur noch eine untergeordnete Rolle.

Die DE-A 12 36 310 beschreibt Käsedeckendispersionen von Poly(vinylacetat), bei denen 10 bis -50 Gew.-% Poly(vinylpropionat) als weiches Copolymer als Ersatz für gängige externe Weichmacher, wie zum Beispiel Dibutylphthalat, welche lebensmittelrechtlich problematisch sind, verwendet wird. Diese Blends haben sich am Markt ebenfalls nicht durchgesetzt.

Derwent Abstract No. 1982-97080E, der sich auf die SU-B-897 199 bezieht, beschreibt eine Schutzschicht für Hartkäse auf Basis einer Copolymerdispersion aus Vinylacetat und Di-n-butylmaleinat, welche 1 bis 10 Gew.-% Glyceroltriacetat enthält.

Derwent Abstract No. 1993-074298, der auf die SU-A-17 22 381 zurückgeht, offenbart eine Copolymerdispersion aus Vinylacetat, Dibutylmaleinat und Acrylsäure, welche eine verbesserte Haltbarkeit und Haftung auf dem Käse aufweist. Diese Zusammensetzungen enthalten zusätzlich 3 bis 5 Gew.-% Glycerintriacetat. Die Verwendung dieses Weichmachers ist jedoch problematisch aufgrund der Lebensmittelgesetze in vielen Ländern, die die Verwendung von Weichmachern bei Lebensmittelkontakt grundsätzlich nicht zulassen.

Copolymere Dispersionen von Vinylestern, insbesondere Vinylacetat und Alkylestern der Maleinsäure, insbesondere mit dem industriell bedeutsamen Dibutylmaleinat, finden ebenfalls in zahlreichen anderen Anwendungsgebieten, beispielsweise auf dem Gebiet der Klebstoffe, Verwendung.

Es finden sich zahlreiche Beispiele, bei denen bei der Herstellung dieser Dispersionen aus Stabilitätsgründen oder auch zur Einstellung spezifischer Produkteigenschaften Kombinationen gemischter Stabilisatorsysteme, bestehend aus Schutzkolloiden wie beispielsweise Poly(vinylalkohol) und/oder modifizierten Stärken oder Cellulosen einerseits, sowie oberflächenaktiver Substanzen andererseits, eingesetzt werden. Auf der anderen Seite ist die Art und Menge der verschiedenen Typen an Stabilisierungsmitteln sowie ihre Wechselwirkung zu berücksichtigen im Hinblick auf wichtige anwendungstechnische Eigenschaften, wie Wasserdampfdurchlässigkeit und insbesondere auch die Wasseraufnahme der Filme und die Wachshaftung, welche für die Eignung einer zur Hartkäsereifung verwendeten Käsedeckmasse grundlegend sind. Die Art und Menge der verwendeten Stabilisierungsmittel beeinflusst demnach maßgeblich das Verhalten der Käsedeckmasse auf dem beschichteten Käse.

Bei der Emulsionscopolymerisation von Vinylestern mit Alkylmaleinaten handelt es sich gemäß der Fachliteratur um einen weitgehend komplexen Prozess. Die im Reaktionsgemisch verwendeten Stabilisierungsmittel üben einen starken Einfluss auf den Gang der Reaktion aus, sei es über Verteilungsphänomene zwischen den bereits im Reaktor vorgelegten und neu zudosierten Monomeren, Beeinflussung der Initiatorzerfallsraten oder durch Kettentransfer auf die Stabilisierungsmittel. Auch eine Agglomeration von Partikeln während der Reaktion wird beobachtet, interpretierbar beispielsweise als Folge einer bei Umsatzoszillation temporär zu niedrigen Konzentration an Emulgator (siehe J. Macromol. Sci. Chem. A22, 941-954 [1985]).

Diese Teilchenagglomeration übt einen starken Einfluss auf die Viskosität und Rheologie der Produkte aus, führt zur einer schlechten Reproduzierbarkeit der Ergebnisse und kann im Extremfall bis zur kolloidalen Instabilität führen. Im koaleszierten Film vermindern größere agglomerierte Partikel als Streuzentren den Anteil des reflektierten Lichts und vermindern dadurch seinen Glanz. Eine wichtige anwendungstechnische Eigenschaft der Dispersionen für Käsedeckmassen ist jedoch ein hoher Filmglanz, der den Käselaiben erst eine ansprechende, optische Präsentation verschafft und somit seinen Verkaufswert erhöht.

Vor der Applikation der fertigen Käsedeckmasse werden der Dispersion zur Konfektionierung Biozide, Lebensmittelfarbstoffe und weitere Hilfsstoffe zugesetzt. Bei diesen Verfahrensschritten ist es für den Hersteller der Lebensmittelbeschichtungsmassen von Vorteil, dass bei dem unter Rühren stattfindenden Konfektionierungsschritt kein zu hoher Viskositätsverlust eintritt. Der Viskositätsverlust durch thixotropes Fließerhalten ist größtenteils auf die Zerstörung von aggregierten Dispersionspartikeln infolge der Scherbelastung zurückzuführen. Dieser Umstand ist auch später bei der Beschichtung der Käselaibe mit speziellen Auftragsmaschinen von Nachteil. Weiterhin kann auch während Umfüll- und/oder Pumpvorgängen eine unerwünschte Viskositätserniedrigung auftreten oder auch beim Transport selbst im Tankwagen.

Aufgrund des Verdünnungsverlustes bei der Konfektionierung der rohen Käsedeckdispersion zu den Käsedeckmassen mit ihren Zugaben ist aber andererseits eine hohe Ausgangsviskosität, vorzugsweise oberhalb von 10.000 mPa·s erwünscht. Diese kann nur sehr bedingt durch die Molekulargewichte polymerer Stabilisierungsmittel eingestellt werden. Im wesentlichen wird die Viskosität durch das Vorhandensein agglomerierter Partikel eingestellt. Diese Eigenschaft führt auf der anderen Seite jedoch wiederum zu einem verminderten Glanz und einer erhöhten Scherinstabilität. Zur Optimierung dieser in sich konträren Eigenschaften bei Lebensmittel-, insbesondere bei Käsedeckmassen, finden sich im Stand der Technik keine befriedigenden Anhaltspunkte.

Die DE-A 197 39 190 offenbart im Ausführungsbeispiel b) die Herstellung einer copolymeren Dispersion mit Vinylacetat und Dibutylmaleinat. Als Stabilisierungssystem wird ausschließlich Poly(vinylalkohol) vom Hydrolysegrad 88 mol-% verwendet. Der Vorteil dieser Systeme liegt in einem hohen Glanz (bei guter Blockfestigkeit) der Filme. Es handelt sich um Klebstoffe, beispielsweise Gummierkleber, der Einsatz der Dispersion als Lebensmittelbeschichtungsmittel wird in dieser Schrift nicht erwähnt.

Der Erfindung lag demnach die Aufgabe zugrunde, eine verbesserte Dispersion, als Basis für antimikrobiell ausgerüstete Hilfsstoffe für die Käsereifung, auf Basis eines Copolymeren von Vinylestern und Dialkylestern der Malein- oder Fumarsäure bereitzustellen, welche sich gegenüber herkömmlichen Produkten bei gleichbleibend hoher Viskosität durch einen deutlich verbesserten Filmglanz und gleichzeitig eine verbesserte Scherstabilität auszeichnet. Darüber hinaus soll die mit der Dispersion hergestellte Beschichtung auch eine möglichst niedrige Wasseraufnahme und eine gute Wachshaftung besitzen.

Überraschend wurde nun gefunden, dass diese Aufgabe durch eine weichmacherfreie, copolymere Poly(vinylester)-Dispersion gelöst wird, die mittels eines gemischten Stabilisierungssystems hergestellt wird, das mindestens einen Emulgator, mindestens zwei Poly(vinylalkohole) mit unterschiedlichen Verseifungsgraden, und gegebenenfalls weitere Stabilisierungsmittel enthält.

Gegenstand der vorliegenden Erfindung ist somit eine Lebensmittelbeschichtungsmasse enthaltend eine weichmacherfreie, wässrige copolymere Poly(vinylester)-Dispersion, die

A) 100 Gewichtsteile eines Copolymerisates aus 40 bis 95 Gew.-% Vinylestern von aliphatischen, gesättigten Carbonsäuren, vorzugsweise Fettsäuren mit einer Kettenlänge von $C_2$-$C_{18}$, insbesondere Vinylacetat, 5 bis 60 Gew.-% Maleinsäureestern und/oder Fumarsäureestern von einwertigen aliphatischen Alkoholen mit einer Kettenlänge von $C_1$-$C_{18}$, insbesondere Dibutylmaleinat und/oder Fumarat, und gegebenenfalls weiteren Comonomeren,

B) 0,1 bis 1,0 Gewichtsteile eines Emulgators, vorzugsweise eines nichtionischen Emulgators,

C) 1 bis 12, vorzugsweise 3 bis 8, Gewichtsteile eines Gemisches von mindestens zwei Poly(vinylalkoholen), bestehend zu

mindestens 0,1 Gewichtsteilen aus mindestens einem Poly(vinylalkohol) vom Hydrolysegrad von 85 bis 90 Mol-% sowie

mindestens 0,1 Gewichtsteilen aus mindestens einem Poly(vinylalkohol) vom Hydrolysegrad von über 90 Mol-%, vorzugsweise von 90,5 bis 94 Mol-%,
und

D) gegebenenfalls weitere Stabilisierungsmittel enthält.

Ein weiterer Gegenstand der vorliegenden Erfindung betrifft die Verwendung einer weichmacherfreien, wässrigen copolymeren Poly(vinylester)-Dispersion, enthaltend

A) 100 Gewichtsteile eines Copolymerisats aus 40 bis 95 Gew.-% Vinylestern von aliphatischen, gesättigten Carbonsäuren, vorzugsweise Fettsäuren mit einer Kettenlänge von $C_2$-$C_{18}$, insbesondere Vinylacetat, 5 bis 60 Gew.-% Maleinsäureestern und/oder Fumarsäureestern von einwertigen aliphatischen Alkoholen mit einer Kettenlänge von $C_1$-$C_{18}$, insbesondere Dibutylmaleinat und/oder Fumarat, und gegebenenfalls weiteren Comonomeren,

B) 0,1 bis 1,0 Gewichtsteile eines Emulgators, vorzugsweise eines nichtionischen Emulgators,

C) 1 bis 12, vorzugsweise 3 bis 8, Gewichtsteile eines Gemisches von mindestens zwei Poly(vinylalkoholen), bestehend zu mindestens 0,1 Gewichtsteilen aus mindestens einem Poly(vinylalkohol) vom Hydrolysegrad von 85 bis 90 Mol%
sowie
mindestens 0,1 Gewichtsteilen aus mindestens einem Poly(vinylalkohol) vom
Hydrolysegrad von über 90 Mol-%, vorzugsweise von 90,5 bis 94 Mol-%,
und

D) gegebenenfalls weitere Stabilisierungsmittel

in Lebensmittelbeschichtungsmassen.

Bei den Vinylestern des Copolymerisats von aliphatischen gesättigten Carbonsäure der Kettenlänge $C_1$-$C_{18}$ handelt es beispielsweise um Vinylformiat, Vinylacetat, Vinylpropionat, Vinylbutyrat, Vinylisobutyrat, Vinylpivalat, Vinyl-2ethyl-hexanoat, Vinylester von $\alpha$-verzweigten Carbonsäuren mit 9 oder 11 Kohlenstoffatomen im Säurerest (® Versaticsäuren), die Vinylester der Laurin-, Palmitin-, Myristin- und Stearinsäure. Der Anteil dieser Vinylester im Polymerisat beträgt mindestens 40 Gew.-%, vorzugsweise mindestens 50 Gew.-%.

Die Verwendung der Vinylester aliphatischer Fettsäuren ist bevorzugt, darunter insbesondere Vinylacetat. Die genannten Vinylester können im Polyvinylester auch nebeneinander vorliegen.

Bei den Maleinsäure- und Fumarsäureestem des Copolymerisats von einwertigen aliphatischen Alkoholen der Kettenlänge $C_1$-$C_{18}$ handelt es sich um solche von gesättigten Alkoholen der Kettenlänge $C_1$-$C_{18}$ oder um solche mit einwertigen aliphatischen ungesättigten Alkoholen der Kettenlänge $C_3$-$C_{18}$, vorzugsweise jedoch um solche mit gesättigten Alkoholen der Kettenlänge $C_4$-$C_8$, insbesondere Dibutylmaleinat oder Di-2-ethylhexylmaleinat und/oder -fumarat.

Zu weiteren Comonomeren, die im Copolymerisat Verwendung finden können, gehören die Ester aliphatischer Carbonsäuren der Kettenlänge $C_3$-$C_{12}$ mit ungesättigten Alkoholen der Kettenlänge $C_3$-$C_{18}$, oder die Ester von ungesättigten aliphatischen Dicarbonsäuren mit Polyethylenglykolen und/oder Polypropylenglykolen.

Der Anteil der Monomergruppe der Maleinsäure- und/oder Fumarsäureester oder die Kombination der Maleinsäure- und/oder Fumarsäureester mit der Gruppe der weiteren Comonomeren beträgt 5 bis 60 Gew.-%, vorzugsweise 20 bis 50 Gew.-%. Die Verwendung von Dibutylmaleinat und/oder -fumarat ist besonders bevorzugt. Zu weiteren Comonomeren, die im Copolymerisat Verwendung finden können, gehören die Acrylsäure- und Methacrylsäureester von einwertigen aliphatischen gesättigten Alkoholen und Etheralkoholen der Kettenlänge $C_1$-$C_{18}$, Vinylchlorid, Vinylidenchlorid, Acrylnitril und Methacrylnitril, Ethylen, Butadien, Isopren, Isobutylen, Propylen, $C_{14}$-$C_{16}$ alpha-Olefine, 2-Chlorbutadien, 2,3-Dichlorbutadien, Tetrafluorethylen, Styrol, Vinylether von einwertigen aliphatischen gesättigten Alkoholen der Kettenlänge $C_1$-$C_{18}$, Acrylsäure, Methacrylsäure, Crotonsäure, Maleinsäure, Fumarsäure, Itaconsäure, Vinylsulfonsäure, Styrolsulfonsäure, Halbester der Malein- bzw. Fumarsäure und der Itaconsäure mit einwertigen aliphatischen gesättigten Alkoholen der Kettenlänge $C_1$-$C_{18}$ sowie deren Alkali- und Ammoniumsalze, Vinylpyrrolidon, Amide der Acryl- und Methacrylsäure und N-Methylolamide der Acryl- und Methacrylsäure sowie deren Ether, N-Vinyl-N-methylacetamid, Acrylsäureester des Diethylaminoethanols und/oder Methacrylsäureester des Dimethylaminoethanols, Acrylsäure- und Methacrylsäureester von zweiwertigen aliphatischen Alkoholen der Kettenlänge $C_2$-$C_{18}$, Divinyl- und Diallylester von gesättigten und ungesättigten aliphatischen Dicarbonsäuren der Kettenlänge $C_3$-$C_{18}$, Vinyl- und Allylester der Acrylsäure und Crotonsäure, Triallylcyanurat und Natrium-2-sulfoethylmethacrylat. Bevorzugt sind als weitere Comonomere Ethylen, die Acrylsäureester einwertiger aliphatischer gesättigter Alkohole der Kettenlänge $C_4$-$C_8$ oder $C_{14}$-$C_{16}$ alpha-Olefine.

Vorzugsweise werden jedoch neben den beiden oben genannten Gruppen der Vinylester und Maleinate keine weiteren Comonomere verwendet.

Als Emulgatoren eignen sich Natrium-, Kalium- und Ammoniumsalze von gradkettigen aliphatischen Carbonsäuren der Kettenlänge $C_{12}$-$C_{20}$, Natriumhydroxyoctadecansulfonat, Natrium-, Kalium- und Ammoniumsalze von Hydroxyfettsäuren der Kettenlänge $C_{12}$-$C_{20}$ und deren Sulfierungs- bzw. Acetylierungsprodukte, Alkylsulfate, auch als Triethanolaminsalze, Alkyl-($C_{10}$-$C_{20}$)-sulfonate, Alkyl($C_{10}$-$C_{20}$)-arylsulfonate, Dimethyldialkyl($C_8$-$C_{18}$)-ammoniumchlorid, Acyl-, Alkyl-, Oleyl- und Alkylaryloxethylate und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylenglykolethern von einwertigen aliphatischen Alkoholen der Kettenlänge $C_{10}$-$C_{12}$ (Di-Natriumsalz), Sulfobernsteinsäure-

4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium- und Ammoniumsalze, Polyoxyethylen-sorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol.

Insbesondere eignen sich nichtionische Emulgatoren und zwar die Polyethenoxid(4-20)ether von Oleylalkohol. Diese Verbindungen werden von 0,1 bis 1,0 Gew.-%, bezogen auf die Menge der Gesamtmonomeren, verwendet, vorzugsweise 0,2 bis 0,85 Gew.-%, und besonders bevorzugt 0,35 bis 0,7 Gew.-%.

Mindestens einer der verwendeten Poly(vinylalkohole) besitzt einen Hydrolysegrad von 85 bis 90 Mol-% und Viskositäten der 4 gew.-%igen wässrigen Lösungen bei 20°C von 2 bis 70 mPa·s.

Mindestens ein anderer verwendeter Poly(vinylalkohol) besitzt einen Hydrolysegrad von über 90 Mol-%, und zwar vorzugsweise 90,5 bis 94 Mol-% und Viskositäten der 4 gew.-%igen wässrigen Lösungen bei 20°C von 2 bis 70 mPa·s.

Der Poly(vinylalkohol) dient als Schutzkolloid. Seine Gesamtmenge beträgt 1 bis 12 Gew.-%, bezogen auf die Masse der Gesamtmonomeren. Vorzugsweise beträgt die verwendete Menge 2 bis 10 Gew.-%, und besonders bevorzugt 3 bis 8 Gew.-%.

Als weitere Stabilisierungsmittel zur Herstellung der Dispersion eignen sich Methylcellulosen, Hydroxyethyl- und Propylcellulosen sowie Natriumcarboxymethylcellulose. Diese können prinzipiell zur Anpassung spezifischer Eigenschaften wie Glanz und Wasserdampfdurchlässigkeit sowie zur Stabilitätsverbesserung mitverwendet werden. In diese Verbindungsgruppe fallen Gelatine, Kasein, Stärke, Gummi arabicum, Hydroxyethylstärke, Natriumalginat, Lactose, Siliciumdioxid sowie Homo- oder Copolymerisate aus den zur Herstellung des Copolymerisats verwendeten Polymeren, bzw. ihrer wasserlöslichen Salze, beispielsweise Polyacrylsäure und Polyvinylpyrrolidon. Diese Verbindungen können ebenso wie der verwendete Polyvinylalkohol und die Celluloseether auch als Verdickungsmittel verwendet werden und nach der Beendigung der Polymerisation zur Einstellung einer geeigneten Applikationsviskosität zugesetzt werden.

Vorzugsweise werden keine weiteren Stabilisierungsmittel während der Polymerisation verwendet bzw. zugesetzt.

Eine bevorzugte Ausführungsform der Erfindung stellt eine weichmacherfreie, wässrige copolymere Poly(vinylester)-Dispersion als Bestandteil einer Lebensmittelbeschichtungsmasse dar, enthaltend:

A) 100 Gewichtsteile eines Copolymerisates aus 40 bis 95 Gew.-% Vinylacetat und 5 bis 60 Gew.-% Dibutylmaleinat und/oder Fumarat, und gegebenenfalls weiteren Comonomeren,

B) 0,35 bis 0,7 Gewichtsteile eines ethoxylierten Oleylalkohols,

C) 3 bis 8 Gewichtsteile eines Gemisches von Poly(vinylalkoholen), bestehend zu mindestens 0,1, vorzugsweise mindestens 2, Gewichtsteilen aus mindestens einem Poly(vinylalkohol) vom Hydrolysegrad von 85 bis 90 Mol-% sowie mindestens 0,1, vorzugsweise mindestens 1 Gewichtsteilen aus mindestens einem Poly(vinylalkohol) vom Hydrolysegrad von 90,5 bis 94 Mol-%

Der Feststoffgehalt der Dispersion beträgt 20 bis 65 Gew.-%, vorzugsweise 30 bis 60 Gew.-%, und besonders bevorzugt 40 bis 55 Gew.-%.

Die Herstellung der erfindungsgemäß zu verwendenden Dispersionen erfolgt vorzugsweise durch radikalische Emulsionspolymerisation. Die Polymerisation kann im Batchverfahren, im Zulaufverfahren, oder kombinierten Batch/Zulauf Verfahren durchgeführt werden. Vorzugsweise wird jedoch im Zulaufverfahren gearbeitet, wobei ein Teil der Monomeren (1 bis 15 Gew.-%) zum Starten der Polymerisation vorgelegt werden.

Als Initiatoren werden beispielsweise verwendet: Wasserstoffperoxid, Benzoylperoxid, Cyclohexanonperoxid, Isopropylcumylhydroperoxid, Persulfate des Kaliums, Natriums und Ammoniums, Peroxide von geradzahligen gesättigten einwertigen aliphatischen Carbonsäuren der Kettenlänge $C_8$-$C_{12}$, Tertiärbuiylhydroperoxid, Ditertiärbutylperoxid, Diisopropylpercarbonat, Azoisobuttersäuredinitril, Acetylcyclohexansulfonylperoxid, Tertiärbutylperbenzoat, Tertiärbutylperoctoat, Bis-(3,5,5-trimethyl)-hexanoylperoxid, Tertiärbutylperpivalat, Hydroperoxypinan, p-Methanhydroperoxid. Die vorgenannten Verbindungen können auch innerhalb eines Redoxsysteme verwendet werden, wobei Übergangsmetallsalze wie Eisen-II-sulfat oder andere Reduktionsmittel mitverwendet werden. Als Reduktionsmittel bzw. Regler können Alkalisalze der Oxymethansulfinsäure, Mercaptane der Kettenlänge $C_{10}$-$C_{14}$, Buten-(I)-ol-(3), Hydroxylaminsalze, Natriumdialkyldithiocarbamat, Natriumbisulfit, Ammoniumbisulfit, Natriumdithionit, Düsopropylxanthogendisulfid, Ascorbinsäure, Weinsäure, Isoascorbinsäure, Borsäure, Harnstoff und Ameisensäure mitverwendet werden.

Vorzugsweise werden jedoch wasserlösliche Persulfate, insbesondere Ammoniumpersulfat oder Natriumpersulfat zum Starten der Polymerisation verwendet.

Nach Abschluss der Polymerisation kann zur Entmonomerisierung eine weitere Nachbehandlung, vorzugsweise mit Redoxkatalysatoren, wie zum Beispiel Kombinationen aus Oxidationsmitteln mit Reduktionsmitteln wie Ascorbinsäure, angeschlossen werden.

Der Dispersion können am Ende weitere Hilfsstoffe zugesetzt werden. In diese Gruppe fallen beispielsweise die genannten Stabilisierungsmittel. Als Zusätze eignen sich Stabilisatoren wie Neutralisierungsmittel und Komplexbildner. Beispielhaft genannt seien Alkali-, Ammonium-, Calciumhydroxide, -carbonate, -phosphate, Alkalisalze der Ethylendiamintetraessigsäure und N-Hydroxyethylethylendiamin-tri-essigsäure, Zitronensäure, sowie Natriumacetat und Phosphorsäure, Ammoniumchlorid, Natriumsulfat, Homopolymerisat aus 2-Acrylamido-2-methyl-propansulfon-säure und ihrer Natrium-, Kalium- und Ammoniumsalze, sowie Stoffe zum Schutze der Dispersion gegen mikrobiellen Befall. Vorzugsweise werden Konservierungsmittel verwendet, die in den einschlägigen Verordnungen zu lebensmittelrechtlichen Vorschriften über Zusatzstoffe für Käse zugelassen sind.

Zur Einstellung der Dispersion zur fertigen Käsedeckmasse können die in den einschlägigen Positivlisten zugelassenen Farbstoffe wie Karoten (E 160a), Annato (E 160b), Carbo Medicinalis vegetabilis (E 153), Titandioxid (E 171), Tartrazin (E 102), Chinolingelb (E 104), Sonnengelb FCF (E 110), Cochenillerot A (E 124), Indigotin (E 132), Brillantschwarz BN (E 151) oder Litholrubin BK (E 180) verwendet werden.

Eine besonders bevorzugte Auswahl der verwendeten Rohstoffe zur Herstellung der Dispersion und zur Konfektionierung entspricht den Richtlinien der holländischen Warenwert B.1.4 und/oder der "XIV. Empfehlung, Teil B der BGVV".

Die erfindungsgemäßen Dispersionen weisen gegenüber herkömmlichen Produkten bei gleichbleibend hoher Viskosität einen deutlich verbesserten Filmglanz und gleichzeitig eine verbesserte Scherstabilität aus. Sie eignen sich speziell als Bestandteil zur Herstellung von Lebensmitteldeckmassen, insbesondere als Hilfsmittel für die Hartkäsereifung, jedoch auch zur Beschichtung anderer Lebensmittel, wie beispielsweise Früchten, Nüssen und Fleischwaren und Saatgut.

Die folgenden Beispiele dienen zur Erläuterung der Erfindung. Angaben über Teile und Prozente beziehen sich auf das Gewicht, sofern nicht anders vermerkt.

Beispiel 1

Herstellung einer Dispersion für eine erfindungsgemäße Lebensmitteldeckmasse

In einem zylindrischen Glasrührkesselreaktor mit Heiz/Kühlbad, Ankerrührer, Dosiervorrichtungen und Rückflusskühler wurden in 112 Teilen entionisiertem Wasser 4,1 Teile PVA BP-28 (teilverseifter Polyvinylalkohol der Firma Chang-Chun Petrochemical Co., Ltd. vom Hydrolysegrad 86 - 89 Mol-% und einer mittleren Viskosität von 60 - 70 mPa·s, gemessen in 4 %iger wässriger Lösung bei 20 °C), sowie 2,9 Teile ® Mowiol 30-92 (höherverseifter Polyvinylalkohol vom Hydrolysegrad 91,5 - 93,3 Mol-% und einer mittleren Viskosität von 28 - 32 mPa·s, gemessen in 4 %iger wässriger Lösung) sowie 0,5 Teile ® Genapol O-200 (ethoxilierter Oleylalkohol der Firma Clariant GmbH mit einem mittleren Ethoxylierungsgrad von 20 mol Ethylenoxid) zusammen mit 0,11 Teilen wasserfreiem Natriumacetat suspendiert und anschließend bei einer Temperatur von mindestens 80°C gelöst. Diese Lösung wurde über Nacht auf Raumtemperatur abgekühlt. Vor der Polymerisation wurden 0,11 Teile Eisessig zugesetzt und der Versuchsansatz aufgeheizt. Bei 65°C wurden 5,7 % von insgesamt 100 Teilen Monomergemisch, bestehend aus 70 Teilen Vinylacetat und 30 Teilen Di-n-butylmaleinat zum Starten der Polymerisation innerhalb von 10 min zugegeben. Der Reaktionsstart erfolgte durch Zusatz von 0,2 Teilen Ammoniumperoxodisulfat in 2,05 Teilen deionisiertem Wasser. Nach der Anpolymerisation (ca. 15 Minuten) wurde das restliche Monomergemisch innerhalb von 3,5 Stunden zudosiert, wobei gleichzeitig eine Lösung von 0,06 Teilen Ammoniumperoxodisulfat in 5,7 Teilen Wasser parallel dosiert wurde. Die Reaktionstemperatur wurde während dieser Zeit bei 70 bis 72°C gehalten. Nach dem Ende der Zuläufe wurden 0,06 Teile Ammoniumperoxodisulfat in 5,7 Teilen Wasser zugesetzt und anschließend bis ca. 90°C 1 Stunde nachpolymerisiert. Zur Reduktion der Restmonomeren wurde in der Abkühlphase durch Zusatz von 0,1 Teilen 30 %igem Wasserstoffperoxid (bei 80°C) und 0,26 Teilen Ascorbinsäure (bei 75°C) nachpolymerisiert. Zur Einstellung eines pH-Wertes von 4,5 wurde der fertigen Dispersion bei Raumtemperatur noch 1,7 Teile 10 %ige Natronlauge zugesetzt. Man erhielt eine koagulatfreie Dispersion vom Feststoffgehalt 45 %, einem Restvinylacetatgehalt von 0,12 %, einer Viskosität von 16.100 mPa·s (Brookfield RVT, Spindel 6, 20 U/Min., 23°C).

Vergleichsbeispiele V1 bis V3

Gemäß der obigen Vorgehensweise stellte man ebenfalls Dispersionen im Viskositätszielbereich von 15.000 bis 20.000 mPa·s und einem Feststoffanteil von 45 %, jedoch mit anderen Stabilisierungsmittel-Kombinationen her. Die verwendeten Materialien und die Messdaten der Dispersionen sind in der Tabelle 1 zusammengefasst. Die Restvinylacetatgehalte lagen in allen Fällen <0,15%.

Tabelle 1

| Beispiel | Stabilisierungssystem | Viskosität (Brookfield RVT) |
|---|---|---|
| 1 | 4,1 GT PVA BP-28<br>2,9 GT Mowiol 30-92[1)]<br>0,5 GT Genapol O-200 | 16.100 mPa·s |
| V1 | 4,1 GT PVA BP-28<br>2,9 GT Mowiol 30-92 | 18100 mPa·s |
| V2 | 3,5 GT Mowiol 40-88<br>3,5 GT Mowiol 26-88<br>0,5 GT Genapol O-200 | 16400 mPa·s |
| V3 | 2 GT Mowiol 40-88<br>5 GT Mowiol 26-88 | 15.600 mPa·s |
| [1)] ®Mowiol ist der Handelsname für Polyvinylalkohol der Firma Clariant GmbH. Die Nomenklatur "XX-YY" kennzeichnet mit XX die Viskosität der 4 %igen wässrigen Lösung bei 20°C in mPa·s und mit YY den mittleren Hydrolysegrad in Mol-%. | | |

Verwendete anwendungstechnische Untersuchungsmethoden für die Ausprüfung als Lebensmittelbeschichtungsmasse

Messung des Filmglanzes

Die Messung des Filmglanzes erfolgte mit einem Dr. Lange Labor-Reflektometer RL 3 der Firma Dr. Bruno Lange GmbH. Die zu untersuchenden Proben wurden mit einer Nassschichtdicke von 300 μm mit Hilfe eines Kastenrakels der Firma Erichsen auf eine Glasplatte aufgezogen und anschließend 24 Stunden bei Raumtemperatur getrocknet. Das Laborreflektometer wird mit Hilfe des Kalibrierstandards A (polierte, hochglänzende Schwarzglasplatte) zunächst kalibriert. Der Messkopf des Reflektometers wird auf die Oberfläche der zu untersuchenden Probe aufgesetzt und die Messung ausgelöst. Das Reflektometer misst nacheinander bei verschiedenen Einfallswinkeln. Die Messung wird als Dreifachbestimmung an drei verschiedenen Aufsetzpunkten auf der zu untersuchenden Oberfläche durchgeführt und der arithmetische Mittelwert berechnet. Ausgewertet wurden die Ergebnisse der Messungen bei 20 ° Einfallswinkel, deren gemittelte Skalenteile angegeben werden.

Bestimmung der Scherstabilität im Schnellrührertest

Ca. 400 g der zu untersuchenden Dispersion, von der vorher die Viskosität bei 23°C gemessen wurde, werden in eine 500 ml PE-Weithalsflasche mit Schraubverschluss gegeben. Der Verschluss wird mit einem Loch versehen, durch welches der verwendete Rührer (Propellerrührer dreiflügelig, ca. 45 mm) durchgeführt wird. Die Dispersion wird für 2 Stunden bei 2.000 U/min mit einem Rührmotor IKA Laborrührer RW 20 D2M gerührt. Danach wird die Dispersion innerhalb von 2 Stunden auf 23°C abgekühlt, die Viskosität gemessen und nach 24 Stunden nochmals die Viskosität gemessen. Der prozentuale Viskositätsabfall wird wie folgt bestimmt:

$$\% \text{ Viskositätsabfall} = [\text{Ausgangsvisk.} - \text{Endvisk. n. 24 h}] / [\text{Ausgangsvisk.}] \cdot 100$$

Wachshaftungstest

Die Filme werden hergestellt, indem 80 g einer mit dem Lebensmittelzusatzstoff E 160b (Handelsware der Firma CSK Food Enrichment N.V.) versetzten und auf 14 % Feststoff verdünnten Dispersion über eine Gaze auf eine mit Rand versehene Metallplatte mit einer Oberfläche von 314 cm$^2$ ausgegossen werden. Auf diese Weise ergibt sich ein getrockneter Polymerfilm von 300 μm Schichtstärke. Aus diesem Film wird ein rundes Filmstück mit einem Durchmesser von 60 mm ausgeschnitten und über eine Zeitdauer von 48 h bei einer Temperatur von 23°C und bei 50 % rel. Luftfeuchte konditioniert. Mit dem erhaltenen Filmstück wird ein mit einem Metallflansch versehener Glaszylinder verschlossen, in den vorher 0,5 g Wasser eingewogen wurden. Danach wird die Filmoberseite mit komplett geschmolzenem gelbem Wachs (® Paradip Yellow B1 der Firma Paramelt B. V.) (80°C) 4 mm stark beschichtet. Nach einer Standzeit von 5 h bei 23°C und 50 % rel. Luftfeuchte wird der Verbund Polymerfilm/Wachs vom Glaszylinder abgenommen und durch Auseinanderziehen per Hand getrennt. Die Haftung wird je nach Trennwiderstand beurteilt:

(+) = Gute Adhäsion mit stärkerer Deformation des Polymerfilms beim Trennen.

(+/-) = Mittelgute Adhäsion mit mittelstarker Deformation des Polymerfilms beim Trennen.

(-) = Schlechtere Adhäsion mit nur gering auftretender Deformation des Polymerfilms beim Trennen.

Wasseraufnahme der Filme

Ein Teil Käsedeckendispersion wird mit 2 Teilen destilliertem Wasser verdünnt. Mit dieser Verdünnung wird ein Gießfilm hergestellt, aus dem nach 24-stündigem Trocknen ca. 3 x 3 cm große Quadrate von ca. 400 mg Gewicht geschnitten werden. Diese Filmstücke werden 24 Stunden bei Raumtemperatur im Vakuumtrockenschrank getrocknet. Die getrockneten Filmstücke werden ausgewogen und in einer bedeckten Petrischale mit destilliertem Wasser komplett blasenfrei bedeckt. Nach 24 Stunden trocknet man jedes Filmstück zwischen zwei Lagen adsorbierendem Papiers und wiegt es anschließend gleich.

Die Wasseraufnahme in % ergibt sich aus dem Quotienten:

$$(\text{Gewicht des gequollenen Films/Gewicht des getrockneten Films}) \cdot 100 - 100$$

Tabelle 2: Ergebnisse der anwendungstechnischen Prüfungen

| Beispiel | Filmglanz SKT | Scherstabilität (% Viskositätsabfall) | Wasseraufnahme % | Wachshaftung |
|---|---|---|---|---|
| 1 | 81 | 73,5% | 15,2 % | (+) |
| V1 | 62 | 95,5% | 40,6 % | (-) |
| V2 | 99 | 79,5 % | 19,8 % | (-) |
| V3 | 40 | 94,1 % | Film reemulgiert | (-) |

Diese Beispiele verdeutlichen das vorteilhafte Zusammenspiel der Komponenten in der erfindungsgemäßen Auswahl an Stabilisierungsmitteln. Die Forderung nach deutlich verbessertem Filmglanz bei hoher Scherstabilität, d.h. geringem prozentualen Viskositätsabfall nach Rührbehandlung wird zunächst sowohl von Beispiel 1, als auch von Vergleichsbeispiel 2 erfüllt, welche beide jeweils die Komponente B) (ethoxylierten Fettalkohol) enthalten. Das erfindungsgemäße Beispiel 1 weist gegenüber dem Vergleichsbeispiel V2 zusätzlich zum Poly(vinylalkohol) vom Hydrolysegrad von 88 Mol-% noch Poly(vinylalkohol) vom Hydrolysegrad von über 90 Mol-% auf und besitzt mit dieser Auswahl eine vorteilhafte Verbesserung in den für eine Käsedeckbeschichtungsmasse wichtigen Eigenschaften der Wachshaftung und der verringerten Wasseraufnahme, die dazu führt, dass bei der Lagerung die beschichteten Hartkäse während der Reifeperiode auf Regalböden in Feuchträumen durch Absorption von Wasser weniger stark anquellen und damit das Kleben der Käselaibe am Brett reduziert wird.

Beispiel 2 und Vergleichsbeispiel V4

Gemäß der Vorgehensweise zur Herstellung der Dispersion im Beispiel 1 stellte man zwei weitere Dispersionen her. Diesmal wurden nur 82 Teile Wasser in der Vorlage verwendet und als Monomergemisch wurden 60 Teile Vinylacetat und 40 Teile Dibutylmaleinat verwendet. Als Stabilisierungsmittel wurden die in der Tabelle 3 aufgeführten Komponenten verwendet. Der Zielbereich der Viskosität lag bei 12.000 bis 18.000 mPa·s und die Feststoffgehalte bei 52 ± 0,15 %. Man erhielt koagulatfreie Dispersionen mit Restvinylacetatgehalten von < 0,15 %.

Tabelle 3

| Beispiel | Stabilisierungssystem | Viskosität (Brookfield RVT) |
|---|---|---|
| 2 | 2,9 GT Mowiol 56-88<br>2,1 GT Mowiol 30-92<br>0,5 GT Genapol O-200 | 17.300 mPa·s |
| V4 | 1 GT Mowiol 40-88<br>4 GT Mowiol 26-88<br>0,5 GT Genapol O-200 | 14.800 mPa·s |

Vergleichsbeispiel V5

® Mowilith SDM 4210 KL, eine von der Firma Clariant GmbH vertriebene Dispersion zur Herstellung von Lebensmitteldeckmassen mit dem Spezifikationsbereich der Viskosität von 12.000 - 18.000 mPa·s und einem Feststoffgehalt von ca. 45 %.

Zusätzlich wurde an diesen Produkten mit Hilfe eines kombinierten Laser-Streu- und Beugungsgerätes zur Bestimmung der Verteilungskurven der Partikelgrößenverteilung (Mastersizer Micro Plus der Firma Malvern Instruments Ltd.) eine Analyse des Massen-Anteils an aggregierten Partikeln bezogen auf die Gesamtheit aller Partikeln durchgeführt. Die Ergebnisse sind in der Tabelle 4 aufgelistet.

Die Produkte wiesen damit folgende anwendungstechnische Eigenschaften auf:

Tabelle 4: Ergebnisse der anwendungstechnischen Prüfungen

| Beispiel | Aggregate Gew. % | Filmglanz SKT | Scherstabilität (% Viskositätsabfall) | Wasseraufnahme % | Wachshaftung |
|---|---|---|---|---|---|
| 2 | 10,7% | 97 | 68,8 % | 16,5 % | (+) |
| V4 | 8 % | 110 | 81,9 % | 24,8 % | (+/-) |
| V5 | 48 % | 75 | 85 % | 31,0 % | nicht bestimmt |

In dieser Aufstellung wird deutlich, dass gegenüber dem Beispiel V5, einer handelsüblichen Käsedeckdispersion, im Beispiel 2 (und auch im Vergleichsbeispiel V4) durch eine verringerte Teilchenagglomeration im Viskositätsfenster von 12.000 bis 18.000 mPa·s ein deutlich höheres Niveau an Filmglanz erzielt werden kann. Das Vergleichsbeispiel V4, welches keinen Poly(vinylalkohol) vom Hydrolysegrad > 90 mol-%, jedoch schon ethoxylierten Fettalkohol enthält, erfüllt die anwendungstechnischen Forderungen an eine Käsedeckdispersion bereits teilweise, jedoch erst mit der Anwesenheit aller erfindungsgemäßen Komponenten im Beispiel 2 wird in der Gesamtheit das vorteilhafte Eigenschaftsbild mit hohem Glanz, niedrigem Rührverlust, niedriger Wasseraufnahme und guter Wachshaftung erzielt.

**Patentansprüche**

1. Lebensmittelbeschichtungsmasse enthaltend eine weichmacherfreie, wässrige copolymere Poly(vinylester)-Dispersion, die

A) 100 Gewichtsteile eines Copolymerisats aus 40 bis 95 Gew.-% Vinylestern von aliphatischen, gesättigten Carbonsäuren, vorzugsweise Fettsäuren mit einer Kettenlänge von $C_1$-$C_{18}$, 5 bis 60 Gew.-% Maleinsäureestern und/oder Fumarsäureestern von einwertigen aliphatischen Alkoholen mit einer Kettenlänge von $C_1$-$C_{18}$, und gegebenenfalls weiteren Comonomeren,
B) 0,1 bis 1,0 Gewichtsteile eines Emulgators, vorzugsweise eines nichtionischen Emulgators,
C) 1 bis 12, vorzugsweise 3 bis 8, Gewichtsteile eines Gemisches von mindestens zwei Poly(vinylalkoholen), bestehend zu
mindestens 0,1 Gewichtsteilen aus mindestens einem Poly(vinylalkohol) vom Hydrolysegrad von 85 bis 90 Mol-% sowie
mindestens 0,1 Gewichtsteilen aus mindestens einem Poly(vinylalkohol) vom Hydrolysegrad von über 90 Mol%, vorzugsweise von 90,5 bis 94 Mol-%, und
D) gegebenenfalls weitere Stabilisierungsmittel aufweist.

**2.** Lebensmittelbeschichtungsmasse enthaltend eine weichmacherfreie, wässrige copolymere Poly(vinylester)-Dispersion nach Anspruch 1, **dadurch gekennzeichnet, dass** das Copolymerisat A) als Vinylester von aliphatischen gesättigten Carbonsäuren der Kettenlänge $C_1$-$C_{18}$ Vinylformiat, Vinylacetat, Vinylpropionat, Vinylbutyrat, Vinylisobutyrat, Vinylpivalat, Vinyl-2-ethyl-hexanoat, Vinylester von $\alpha$-verzweigten Carbonsäuren mit 9 oder 11 Kohlenstoffatomen im Säurerest oder Vinylester der Laurin-, Palmitin-, Myristin- und Stearinsäure oder Mischungen von diesen enthält, vorzugsweise Vinylacetat.

**3.** Lebensmittelbeschichtungsmasse enthaltend eine weichmacherfreie, wässrige copolymere Poly(vinylester)-Dispersion nach Anspruch 1 oder 2, **dadurch gekennzeichnet, dass** das Copolymerisat A) Vinylester von aliphatischen gesättigten Carbonsäuren der Kettenlänge $C_1$-$C_{18}$ in einer Menge von mindestens 50 Gew.-% enthält.

**4.** Lebensmittelbeschichtungsmasse enthaltend eine weichmacherfreie, wässrige copolymere Poly(vinylester)-Dispersion nach einem oder mehreren der Ansprüche 1 bis 3, **dadurch gekennzeichnet, dass** das Copolymerisat A) als Maleinsäure- und/oder Fumarsäureester von einwertigen aliphatischen Alkoholen der Kettenlänge $C_1$-$C_{18}$ Ester von gesättigten Alkoholen der Kettenlänge $C_1$-$C_{18}$ oder Ester von einwertigen aliphatischen ungesättigten Alkoholen der Kettenlänge $C_3$-$C_{18}$ enthält, vorzugsweise Ester mit gesättigten Alkoholen der Kettenlänge $C_4$-$C_8$, insbesondere Dibutylmaleinat oder Di-2-ethylhexyl-maleinat und/oder -fumarat.

**5.** Lebensmittelbeschichtungsmasse enthaltend eine weichmacherfreie, wässrige copolymere Poly(vinylester)-Dispersion nach einem oder mehreren der Ansprüche 1 bis 3, **dadurch gekennzeichnet, dass** das Copolymerisat A) als weitere Comonomere Ester aliphatischer Carbonsäuren der Kettenlänge $C_3$-$C_{12}$ mit ungesättigten Alkoholen der Kettenlänge $C_3$-$C_{18}$ enthält.

**6.** Lebensmittelbeschichtungsmasse enthaltend eine weichmacherfreie, wässrige copolymere Poly(vinylester)-Dispersion nach einem oder mehreren der Ansprüche 1 bis 3, **dadurch gekennzeichnet, dass** das Copolymerisat A) als weitere Comonomere Ester von ungesättigten aliphatischen Dicarbonsäuren mit Polyethylenglykolen und/oder Polypropylenglykolen enthält.

**7.** Lebensmittelbeschichtungsmasse enthaltend eine weichmacherfreie, wässrige copolymere Poly(vinylester)-Dispersion nach einem oder nach mehreren der Ansprüche 1 bis 6, **dadurch gekennzeichnet, dass** das Copolymerisat A) die Monomergruppe der Maleinsäure- und/oder Fumarsäureester oder die Kombination der Maleinsäure- und/oder Fumarsäureester mit der Gruppe der weiteren Comonomeren in einer Menge von 20 bis 50 Gew.-% enthält.

**8.** Lebensmittelbeschichtungsmasse enthaltend eine weichmacherfreie, wässrige copolymere Poly(vinylester)-Dispersion nach einem oder nach mehreren der Ansprüche 1 bis 7, **dadurch gekennzeichnet, dass** die Dispersion als Emulgatoren, Komponente B), Natrium-, Kalium- und Ammoniumsalze von gradkettigen aliphatischen Carbonsäuren der Kettenlänge $C_{12}$-$C_{20}$, Natriumhydroxyoctadecansulfonat, Natrium-, Kalium- und Ammoniumsalze von Hydroxyfettsäuren der Kettenlänge $C_{12}$-$C_{20}$ und deren Sulfierungs- bzw. Acetylierungsprodukte, Alkylsulfate, Triethanolaminsalze, Alkyl-($C_{10}$-$C_{20}$)-sulfonate, Alkyl($C_{10}$-$C_{20}$)-arylsulfonate, Dimethyldialkyl($C_8$-$C_{18}$)-ammoniumchlorid, Acyl-, Alkyl-, Oleyl- und Alkylaryloxethylate und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylenglykolethern von einwertigen aliphatischen Alkoholen der Kettenlänge $C_{10}$-$C_{12}$ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium- und Ammoniumsalze, Polyoxyethylen-sorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium oder Copolymere aus Ethylenoxyd und Propylenoxyd mit einem Mindestgehalt von 10 Gew.-% Ethylenoxid enthält, vorzugsweise Natriumlaurylsulfat, Natriumlaurylethersulfat, Polyethylenglykol(4-20)ether des Oleylalkohols oder Polyethenoxid(4-14)ether von Nonylphenol.

**9.** Lebensmittelbeschichtungsmasse enthaltend eine weichmacherfreie, wässrige copolymere Poly(vinylester)-Dispersion nach einem oder nach mehren der Ansprüche 1 bis 8, **dadurch gekennzeichnet, dass** die Dispersion die Emulgatoren in einer Menge im Bereich von 0,2 bis 0,85 Gew.-Teilen enthält, bevorzugt von 0,35 bis 0,7 Gew.-Teilen.

**10.** Lebensmittelbeschichtungsmasse enthaltend eine weichmacherfreie, wässrige copolymere Poly(vinylester)-Dispersion nach einem oder nach mehreren der Ansprüche 1 bis 9, **dadurch gekennzeichnet, dass** die Dispersion als Komponente C) einen ersten Poly(vinylalkohol) enthält, der einen Hydrolysegrad von 85 bis 90 Mol-% besitzt und eine Viskosität seiner 4 gew.-%igen wässrigen Lösung bei 20°C von 2 bis 70 mPa.s aufweist, und einen zweiten Poly-(vinylalkohol), der einen Hydrolysegrad im Bereich von 90,5 bis 94 Mol-% besitzt und eine Viskosität seiner 4 gew.-%igen wässrigen Lösung bei 20°C von 2 bis 70 mPa.s aufweist.

11. Lebensmittelbeschichtungsmasse enthaltend eine weichmacherfreie, wässrige copolymere Poly(vinylester)-Dispersion nach Anspruch 1, **dadurch gekennzeichnet, dass** diese

> A) 100 Gewichtsteile eines Copolymerisates aus 40 bis 95 Gew.-% Vinylacetat und 5 bis 60 Gew.-% Dibutylmaleinat und/oder -fumarat, und gegebenenfalls weiteren Comonomeren,
> B) 0,35 bis 0,7 Gewichtsteile eines ethoxylierten Oleylalkohols, und
> C) 3 bis 8 Gewichtsteile eines Gemisches von Poly(vinylalkoholen), bestehend zu
> mindestens 0,1, vorzugsweise mindestens 2, Gewichtsteilen aus mindestens einem Poly(vinylalkohol) vom Hydrolysegrad von 85 bis 90 Mol-%
> sowie
> mindestens 0,1, vorzugsweise mindestens 1 Gewichtsteilen aus mindestens einem Poly(vinylalkohol) vom Hydrolysegrad von 90,5 bis 94 Mol-%

enthält.

12. Verfahren zum Herstellen einer weichmacherfreien wässrigen copolymeren Poly(vinylester)-Dispersion eines Copolymerisats A) nach Anspruch 1 durch radikalische Emulsionspolymerisation, bei der die Zugabe der das Copolymerisat A) ausbildenden Monomeren im Batchverfahren, im Zulaufverfahren, oder im kombinierten Batch/Zulauf-Verfahren vorgenommen wird, wobei Monomere in einer Menge im Bereich von 1 bis 15 Gew.-%, bezogen auf die Gesamtmenge an Monomeren, zum Starten der Polymerisation vorgelegt werden.

13. Verwendung einer weichmacherfreien, wässrigen copolymeren Poly(vinylester)-Dispersion, enthaltend

> A) 100 Gewichtsteile eines Copolymerisats aus 40 bis 95 Gew.-% Vinylestern von aliphatischen, gesättigten Carbonsäuren und 5 bis 60 Gew.-% Maleinsäureestern und/oder Fumarsäureestem von einwertigen aliphatischen Alkoholen mit einer Kettenlänge von $C_1$-$C_{18}$ und gegebenenfalls weiteren Comonomeren,
> B) 0,1 bis 1,0 Gewichtsteile eines Emulgators,
> C) 1 bis 12 Gewichtstelle eines Gemisches von mindestens zwei Poly(vinylalkoholen), bestehend zu
> mindestens 0,1 Gewichtsteilen aus mindestens einem Poly(vinylalkohol) vom Hydrolysegrad von 85 bis 90 Mol-%
> sowie
> mindestens 0,1 Gewichtsteilen aus mindestens einem Poly(vinylalkohol) vom Hydrolysegrad von über 90 Mol-%, und
> D) gegebenenfalls weiteren Stabilisierungsmittein

in Lebensmittelbeschichtungsmassen.

14. Verwendung gemäß Anspruch 13 in einer Lebensmittelbeschichtungsmasse zur Oberflächenbehandlung oder -beschichtung von Hart- oder Schnittkäse.

15. Verwendung gemäß Anspruch 13 in einer Lebensmittelbeschichtungsmasse zur Oberflächenbehandlung oder-beschichtung von Fleischwaren, Früchten, Nüssen oder Saatgut.

## Claims

1. A food coating substance comprising a plasticizer-free, aqueous copolymer poly(vinyl ester) dispersion which comprises

> A) 100 parts by weight of a copolymer of 40 to 95% by weight of vinyl esters of aliphatic saturated carboxylic acids, preferably fatty acids of a chain length of $C_1$-$C_{18}$, 5 to 60% by weight of maleic esters and/or fumaric esters of monohydric aliphatic alcohols of a chain length of $C_1$-$C_{18}$, and optionally other comonomers,
> B) 0.1 to 1.0 part by weight of an emulsifier, preferably a nonionic emulsifier,
> C) 1 to 12, preferably 3 to 8, parts by weight of a mixture of at least two poly(vinyl alcohol)s, consisting of
> at least 0.1 part by weight of at least one poly(vinyl alcohol) of a degree of hydrolysis of 85 to 90 mol%
> and also

at least 0.1 part by weight of at least one poly(vinyl alcohol) of a degree of hydrolysis of greater than 90 mol%, preferably 90.5 to 94 mol%, and

D) optionally other stabilizers.

2. The food coating substance comprising a plasticizer-free, aqueous copolymer poly(vinyl ester) dispersion as claimed in claim 1, wherein the copolymer A), as vinyl ester of aliphatic saturated carboxylic acids of chain length $C_1$-$C_{18}$, comprises vinyl formate, vinyl acetate, vinyl propionate, vinyl butyrate, vinyl isobutyrate, vinyl pivalate, vinyl 2-ethylhexanoate, vinyl esters of $\alpha$-branched carboxylic acids having 9 or 11 carbon atoms in the acid group, or vinyl esters of lauric, palmitic, myristic and stearic acids or mixtures of these, preferably vinyl acetate.

3. The food coating substance comprising a plasticizer-free, aqueous copolymer poly(vinyl ester) dispersion as claimed in claim 1 or 2, wherein the copolymer A) comprises vinyl esters of aliphatic saturated carboxylic acids of chain length $C_1$-$C_{18}$ in an amount of at least 50% by weight.

4. The food coating substance comprising a plasticizer-free, aqueous copolymer poly(vinyl ester) dispersion as claimed in one or more of claims 1 to 3, wherein the copolymer A), as maleic and/or fumaric esters of monohydric aliphatic alcohols of chain length $C_1$-$C_{18}$, comprises esters of saturated alcohols of chain length $C_1$-$C_{18}$ or esters of monohydric aliphatic unsaturated alcohols of chain length $C_3$-$C_{18}$, preferably esters with saturated alcohols of chain length $C_4$-$C_8$, in particular dibutyl maleate or di-2-ethylhexyl maleate and/or di-2-ethylhexyl fumarate.

5. The food coating substance comprising a plasticizer-free, aqueous copolymer poly(vinyl ester) dispersion as claimed in one or more of claims 1 to 3, wherein the copolymer A), as other comonomers, comprises esters of aliphatic carboxylic acids of chain length $C_3$-$C_{12}$ with unsaturated alcohols of chain length $C_3$-$C_{18}$.

6. The food coating substance comprising a plasticizer-free, aqueous copolymer poly(vinyl ester) dispersion as claimed in one or more of claims 1 to 3, wherein the copolymer A), as other comonomers, comprises esters of unsaturated aliphatic dicarboxylic acids with polyethylene glycols and/or polypropylene glycols.

7. The food coating substance comprising a plasticizer-free, aqueous copolymer poly(vinyl ester) dispersion as claimed in one or more of claims 1 to 6, wherein the copolymer A) comprises the monomer group of maleic and/or fumaric esters or the combination of maleic and/or fumaric esters with the group of other comonomers in an amount of 20 to 50% by weight.

8. The food coating substance comprising a plasticizer-free, aqueous copolymer poly(vinyl ester) dispersion as claimed in one or more of claims 1 to 7, wherein the dispersion, as emulsifiers, component B), comprises sodium salts, potassium salts and ammonium salts of unbranched aliphatic carboxylic acids of chain length $C_{12}$-$C_{20}$, sodium hydroxyoctadecanesulfonate, sodium salts, potassium salts and ammonium salts of hydroxy fatty acids of chain length $C_{12}$-$C_{20}$ and their sulfonation and acetylation products, alkyl sulfates, triethanolamine salts, alkyl ($C_{10}$-$C_{20}$)-sulfonates, alkyl($C_{10}$-$C_{20}$)-arylsulfonates, dimethyldialkyl($C_8$-$C_{18}$)-ammonium chloride, acyl, alkyl, oleyl and alkylaryl ethoxylates and their sulfonation products, alkali metal salts of sulfosuccinic esters with aliphatic saturated monohydric alcohols of chain length $C_4$-$C_{16}$, 4-esters of sulfosuccinic acid with polyethylene glycol ethers of monohydric aliphatic alcohols of chain length $C_{10}$-$C_{12}$ (disodium salt), 4-esters of sulfosuccinic acid with polyethylene glycol nonylphenyl ether (disodium salt), sulfosuccinic acid biscyclohexyl ester (sodium salt), lignosulfonic acid and its calcium, magnesium, sodium and ammonium salts, polyoxyethylene sorbitan monooleate containing 20 ethylene oxide groups, oleoresin acids, hydrogenated and dehydrogenated oleoresin acids and their alkali metal salts, sodium dodecyl diphenyl ether disulfonate or copolymers of ethylene oxide and propylene oxide having a minimum content of 10% by weight of ethylene oxide, preferably sodium lauryl sulfate, sodium lauryl ether sulfate, polyethylene glycol (4-20) ethers of oleyl alcohol, or polyethene oxide (4-14) ethers of nonylphenol.

9. The food coating substance comprising a plasticizer-free, aqueous copolymer poly(vinyl ester) dispersion as claimed in one or more of claims 1 to 8, wherein the dispersion comprises the emulsifiers in an amount in the range from 0.2 to 0.85 part by weight, preferably from 0.35 to 0.7 part by weight.

10. The food coating substance comprising a plasticizer-free, aqueous copolymer poly(vinyl ester) dispersion as claimed in one or more of claims 1 to 9, wherein the dispersion, as component C), comprises a first poly(vinyl alcohol) which has a degree of hydrolysis of 85 to 90 mol% and a viscosity of its 4% strength aqueous solution at 20°C of 2 to 70 mPa·s, and a second poly(vinyl alcohol) which has a degree of hydrolysis in the range from 90.5 to 94 mol% and a viscosity of its 4% by weight aqueous solution at 20°C of 2 to 70 mPa·s.

11. The food coating substance comprising a plasticizer-free, aqueous copolymer poly(vinyl ester) dispersion as claimed in claim 1, wherein it comprises

A) 100 parts by weight of a copolymer of 40 to 95% by weight of vinyl acetate and 5 to 60% by weight of dibutyl maleate and/or dibutyl fumarate, and optionally other comonomers,
B) 0.35 to 0.7 parts by weight of an ethoxylated oleyl alcohol, and
C) 3 to 8 parts by weight of a mixture of poly(vinyl alcohol)s, consisting of
at least 0.1, preferably at least 2, parts by weight of at least one poly(vinyl alcohol) of a degree of hydrolysis of 85 to 90 mol%
and also
at least 0.1, preferably at least 1, part by weight of at least one poly(vinyl alcohol) of a degree of hydrolysis of 90.5 to 94 mol%.

12. A process for producing a plasticizer-free aqueous copolymer poly(vinyl ester) dispersion of a copolymer A) as claimed in claim 1 by free-radical emulsion polymerization in which the monomers forming the copolymer A) are fed in in the batch process, in the feed stream process, or in the combined batch/feed stream process, monomers being charged in an amount in the range from 1 to 15% by weight, based on the total amount of monomers, to initiate the polymerization.

13. The use of a plasticizer-free, aqueous copolymer poly(vinyl ester) dispersion comprising

A) 100 parts by weight of a copolymer of 40 to 95% by weight of vinyl esters of aliphatic saturated carboxylic acids and 5 to 60% by weight of maleic esters and/or fumaric esters of monohydric aliphatic alcohols of a chain length of $C_1$-$C_{18}$, and optionally other comonomers,
B) 0.1 to 1.0 part by weight of an emulsifier,
C) 1 to 12 parts by weight of a mixture of at least two poly(vinyl alcohol)s, consisting of
at least 0.1 part by weight of at least one poly(vinyl alcohol) of a degree of hydrolysis of 85 to 90 mol%
and also
at least 0.1 part by weight of at least one poly(vinyl alcohol) of a degree of hydrolysis of greater than 90 mol%, and
D) optionally other stabilizers

in food coating substances.

14. The use as claimed in claim 13 in a food coating substance for the surface treatment or surface coating of hard cheese or semi-hard cheese.

15. The use as claimed in claim 13 in a food coating substance for the surface treatment or surface coating of meat products, fruits, nuts or seed material.

**Revendications**

1. Substance de recouvrement de produits alimentaires contenant une dispersion aqueuse copolymère, sans plastifiant, de poly(ester de vinyle), qui présente

A) 100 parties en poids d'un copolymère de 40 à 95 % en poids d'esters de vinyle d'acides carboxyliques aliphatiques saturés, de préférence d'acides gras avec une longueur de chaîne en $C_1$ à $C_{18}$, de 5 à 60 % en poids d'esters d'acide maléique et/ou d'esters d'acide fumarique avec des alcools aliphatiques monohydroxylés ayant une longueur de chaîne en $C_1$ à $C_{18}$, et éventuellement d'autres comonomères,
B) 0,1 à 1,0 partie en poids d'un émulsifiant, de préférence un émulsifiant non ionique,
C) 1 à 12, de préférence 3 à 8, parties en poids d'un mélange d'au moins deux poly(vinylalcools), constitués de
au moins 0,1 partie en poids d'au moins un poly(vinylalcool) d'un degré d'hydrolyse de 85 à 90 % en moles ainsi que
au moins 0,1 partie en poids d'au moins un poly(vinylalcool) de degré d'hydrolyse supérieur à 90 % en moles, de préférence de 90,5 à 94 % en moles, et
D) éventuellement d'autres agents de stabilisation.

2. Substance de recouvrement de produits alimentaires contenant une dispersion aqueuse copolymère, sans plastifiant, de poly(ester de vinyle) selon la revendication 1, **caractérisée en ce que** le copolymère A) contient comme ester de vinyle d'acides carboxyliques aliphatiques saturés de longueur de chaîne en $C_1$ à $C_{18}$ le formiate de vinyle, acétate de vinyle, propionate de vinyle, butyrate de vinyle, isobutyrate de vinyle, pivalate de vinyle, 2-éthyl-hexanoate de vinyle, un ester de vinyle d'acides carboxyliques ramifiés en $\alpha$ avec 9 ou 11 atomes de carbone dans le radical acide ou un ester de vinyle de l'acide laurique, palmitique myristique et stéarique ou des mélanges entre eux, de préférence l'acétate de vinyle.

3. Substance de recouvrement de produits alimentaires contenant une dispersion aqueuse copolymère, sans plastifiant, de poly(ester de vinyle) selon la revendication 1 ou 2, **caractérisée en ce que** le copolymère A) contient des esters de vinyle d'acides carboxyliques aliphatiques saturés de longueur de chaîne en $C_1$ à $C_{18}$ en une quantité d'au moins 50 % en poids.

4. Substance de recouvrement de produits alimentaires contenant une dispersion aqueuse copolymère, sans plastifiant, de poly(ester de vinyle) selon une ou plusieurs des revendications 1 à 3, **caractérisée en ce que** le copolymère A) contient comme esters d'acide maléique et/ou d'acide fumarique avec des alcools aliphatiques monohydroxylés de longueur de chaîne en $C_1$ à $C_{18}$, esters d'alcools saturés de longueur de chaîne en $C_1$ à $C_{18}$ ou esters d'alcools aliphatiques insaturés monohydroxylés de longueur de chaîne en $C_3$ à $C_{18}$, de préférence des esters avec des alcools saturés de longueur de chaîne en $C_4$ à $C_8$, en particulier le maléate de dibutyle ou le maléate et/ou le fumarate de di-2-éthylhexyle.

5. Substance de recouvrement de produits alimentaires contenant une dispersion aqueuse copolymère, sans plastifiant, de poly(ester de vinyle) selon une ou plusieurs des revendications 1 à 3, **caractérisée en ce que** le copolymère A) contient comme autres comonomères des esters d'acides carboxyliques aliphatiques de longueur de chaîne en $C_3$ à $C_{12}$ avec des alcools insaturés de longueur de chaîne en $C_3$ à $C_{18}$.

6. Substance de recouvrement de produits alimentaires contenant une dispersion aqueuse copolymère, sans plastifiant, de poly(ester de vinyle) selon une ou plusieurs des revendications 1 à 3, **caractérisée en ce que** le copolymère A) contient comme autres comonomères des esters d'acide dicarboxyliques aliphatiques insaturés avec des polyéthylèneglycols et/ou des polypropylèneglycols.

7. Substance de recouvrement de produits alimentaires contenant une dispersion aqueuse copolymère, sans plastifiant, de poly(ester de vinyle) selon une ou selon plusieurs des revendications 1 à 6, **caractérisée en ce que** le copolymère A) contient le groupe monomère des esters d'acide maléique et/ou fumarique ou la combinaison des esters d'acide maléique et/ou fumarique avec le groupe des autres monomères en une quantité de 20 à 50 % en poids.

8. Substance de recouvrement de produits alimentaires contenant une dispersion aqueuse copolymère, sans plastifiant, de poly(ester de vinyle) selon une ou plusieurs des revendications 1 à 7, **caractérisée en ce que** la dispersion contient comme émulsifiants, composant B), des sels de sodium, potassium et d'ammonium d'acides carboxyliques aliphatiques à chaîne linéaire ayant une longueur de chaîne en $C_{12}$ à $C_{20}$, l'hydroxyoctadécanesulfonate de sodium, des sels de sodium, potassium et d'ammonium d'hydroxyacides gras de longueur de chaîne en $C_{12}$ à $C_{20}$ et leurs produits de sulfonation ou d'acétylation, des sulfates d'alkyle, des sels de triéthanolamine, des sulfonates d'alkyle en $C_{10}$ à $C_{20}$, arylsulfonates d'alkyle en $C_{10}$ à $C_{20}$, chlorure de diméthyldi(alkyle en $C_8$ à $C_{18}$)-ammonium, des éthylates d'acyle, d'alkyle d'oléyle et d'alkylaryle et leurs produits de sulfonation, des sels alcalins des esters d'acide sulfosuccinique avec des alcools monohydroxylés saturés aliphatiques de longueur de chaîne en $C_4$ à $C_{16}$, des 4-esters d'acide sulfosuccinique avec des polyéthylèneglycoléthers d'alcools aliphatiques monohydroxylés de longueur de chaîne en $C_{10}$ à $C_{12}$ (sel de di-sodium), les 4-esters d'acide sulfosuccinique avec des polyéthylèneglycolnonylphényléthers (sel de di-sodium), l'ester bis-cyclohexylique d'acide sulfosuccinique (sel de sodium), l'acide lignosulfonique ainsi que ses sels de calcium, magnésium, sodium et ammonium, le mono-oléate de polyoxyéthylènesorbitane avec 20 groupes oxyde d'éthylène, les acides résiniques, les acides résiniques hydrogénés et déshydrogénés ainsi que leurs sels alcalins, l'acide diphényléthérdisulfonique sodium dodécylé ou les copolymères d'oxyde d'éthylène et d'oxyde de propylène, avec une teneur minimum de 10 % en poids d'oxyde d'éthylène, de préférence le laurylsulfate de sodium, le lauryl-éthersulfate de sodium, le polyéthylèneglycol(4-20)éther de l'oléylalcool ou le polyéthène-oxyde(4-14)éther de nonylphénol.

9. Substance de recouvrement de produits alimentaires contenant une dispersion aqueuse copolymère, sans plastifiant, de poly(ester, de vinyle) selon une ou plusieurs des revendications 1 à 8, **caractérisée en ce que** la dispersion contient les émulsifiants en une quantité dans la gamme de 0,2 à 0,85 partie en poids, de préférence de 0,35 à 0,7 partie en poids.

**10.** Substance de recouvrement de produits alimentaires contenant une dispersion aqueuse copolymère, sans plastifiant, de poly(ester de vinyle) selon une ou plusieurs des revendications 1 à 9, **caractérisée en ce que** la dispersion contient comme composant C) un premier poly(vinylalcool), qui possède un degré d'hydrolyse de 85 à 90 % en moles et une viscosité de sa solution aqueuse à 4 % en poids à 20 °C de 2 à 70 mPa·s, et un deuxième poly (vinylalcool), qui possède un degré d'hydrolyse dans la gamme de 90,5 à 94 % en moles et une viscosité de sa solution aqueuse à 4 % en poids à 20 °C de 2 à 70 mPa·s.

**11.** Substance de recouvrement de produits alimentaires contenant une dispersion aqueuse copolymère, sans plastifiant, de poly(ester de vinyle) selon la revendication 1, **caractérisée en ce que** celle-ci contient

A) 100 parties en poids d'un copolymère de 40 à 95 % en poids d'acétate de vinyle et de 5 à 60 % en poids de maléate et/ou de fumarate de dibutyle, et éventuellement d'autres comonomères,
B) 0,35 à 0,7 partie en poids d'un oléylalcool éthoxylé, et
C) 3 à 8 parties en poids d'un mélange de poly(vinylalcools) constitué de
au moins 0,1, de préférence au moins 2, parties en poids d'au moins un poly(vinylalcool) de degré d'hydrolyse de 85 à 90 % en moles
ainsi
au moins 0,1, de préférence au moins 1 partie en poids d'au moins un poly(vinylalcool) de degré d'hydrolyse de 90,5 à 94 % en moles.

**12.** Procédé de préparation d'une dispersion aqueuse copolymère, sans plastifiant, de poly(ester de vinyle) d'un copolymère A) selon la revendication 1 par polymérisation radicalaire en émulsion, dans laquelle on effectue l'ajout des monomères formant le copolymère A) dans le procédé discontinu, dans le procédé continu, ou dans le procédé combiné discontinu/continu, dans lequel les monomères sont présents au démarrage de la polymérisation en une quantité dans la gamme de 1 à 15 % en poids par rapport à la quantité totale de monomères.

**13.** Utilisation d'une dispersion aqueuse copolymère, sans plastifiant, de poly(ester de vinyle), contenant

A) 100 parties en poids d'un copolymère de 40 à 95 % en poids d'esters de vinyle d'acides carboxyliques aliphatiques saturés et de 5 à 60 % en poids d'esters d'acide maléique et/ou d'esters d'acide fumarique d'alcools aliphatiques monohydroxylés avec une longueur de chaîne en $C_1$ à $C_{18}$ et éventuellement d'autres comonomères,
B) 0,1 à 1,0 partie en poids d'un émulsifiant,
C) 1 à 12 parties en poids d'un mélange d'au moins deux poly(vinylalcools), constitué de
au moins 0,1 partie en poids d'au moins un poly(vinylalcool) de degré d'hydrolyse de 85 à 90 % en moles ainsi
qu'au moins 0,1 partie en poids d'au moins un poly (vinylalcool) de degré d'hydrolyse supérieur à 90 % en moles, et
C) éventuellement d'autres agents de stabilisation dans des substances de recouvrement de produits alimentaires.

**14.** Utilisation selon la revendication 13 dans une substance de recouvrement de produits alimentaires pour le traitement ou le revêtement de surface de fromage dur ou à la coupe.

**15.** Utilisation selon la revendication 13 dans une substance de recouvrement de produits alimentaires pour le traitement ou le revêtement de surface de viandes, de fruits, de noix ou de semences.